(19) **Europäisches Patentamt**

**European Patent Office**

**Office européen des brevets**

(11) Veröffentlichungsnummer: **0 214 482 B1**

(12) **EUROPÄISCHE PATENTSCHRIFT**

(45) Veröffentlichungstag der Patentschrift: **06.05.92**

(51) Int. Cl.⁵: **B29C 45/42**, B25J 19/00

(21) Anmeldenummer: **86111010.4**

(22) Anmeldetag: **09.08.86**

(54) **Spritzling-Entnahmevorrichtung für Spritzgiessmaschinen.**

(30) Priorität: **11.09.85 DE 3532300**

(43) Veröffentlichungstag der Anmeldung:
**18.03.87 Patentblatt 87/12**

(45) Bekanntmachung des Hinweises auf die
Patenterteilung:
**06.05.92 Patentblatt 92/19**

(84) Benannte Vertragsstaaten:
**AT BE CH DE FR GB IT LI LU NL SE**

(56) Entgegenhaltungen:
DE-A- 2 941 040
FR-A- 2 334 467

**PLASTVERARBEITER, Band 36, Nr. 6, Juni
1985, Seiten 106-109, Speyer, DE; "Im Umfeld
der Maschine liegen jetzt die Schwerpunkte"**

(73) Patentinhaber: **Battenfeld Kunststoffmaschinen Ges.m.b.H.
Wiener-Neustädter-Strasse 81
AT-2542 Kottingbrunn(AT)**

(72) Erfinder: **Heindl, Friedrich
Dörflergasse 43
A-2500 Baden(AT)**
Erfinder: **Hellmann, Wolf Dieter
Schlehdornweg 13
W-8432 Beilngries(DE)**

(74) Vertreter: **Müller, Gerd et al
Patentanwälte HEMMERICH-
MÜLLER-GROSSE-POLLMEIER-MEY Hammerstrasse 2
W-5900 Siegen 1(DE)**

## Beschreibung

Die Erfindung betrifft eine Vorrichtung zur Spritzling-Entnahme aus dem geöffneten Spritzwerkzeug von Spritzgießmaschinen, entsprechend dem Oberbegriff des Patentanspruchs 1.

Eine gattungsgemäße Spritzling-Entnahmevorrichtung zeigt die DE-A-29 41 040. Eine Unzulänglichkeit dieser Vorrichtung liegt darin, daß beim Einfahren des Kolbens in die gewünschte Position die über bzw. unter diesem in Arbeitsräumen befindliche Luft eine Federwirkung auf den Kolben ausübt, so daß dieser und damit auch das von ihm bewegte Vorrichtungsteil in unkontrollierbarer Art und Weise nachschwingt, bevor es in der angesteuerten Position zur Ruhe kommt. Dieses federnde Nachschwingen der Vorrichtungsteile wirkt sich besonders nachteilig für den in die Schließeinheit einfahrenden Spritzling-Greifer aus, weil dieser den Spritzling immer erst ordnungsgemäß erfassen kann, wenn er in der angesteuerten Position völlig zur Ruhe gekommen ist. Der Bewegungsablauf für das Hängeglied und den davon getragenen Spritzling-Greifer muß also zeitlich so bemessen werden, daß in jedem Falle der Nachschwingungsvorgang beendet ist, wenn der Greifer den Spritzling im geöffneten Spritzwerkzeug erfaßt. Ein weiterer Nachteil liegt darin, daß sich der das Hängeglied tragende Schlitten nur in seiner oberen Endlage durch die der Vertikalführung zugeordneten Federdrucksperre blockieren läßt.

Die Erfindung bezweckt die Vermeidung dieser Unzulänglichkeiten. Deshalb liegt ihr die Aufgabe zugrunde, eine gattungsgemäße Vorrichtung zur Spritzling-Entnahme aus dem geöffneten Spritzwerkzeug einer Spritzgießmaschine so zu verbessern, daß ein Nachschwingen des Spritzling-Greifers zumindest in seiner in das geöffnete Spritzwerkzeug eingefahrenen Entnahmeposition wirksam unterbunden wird und der Schlitten am vertikalen Führungsholm bei Energieausfall in seiner jeweiligen Einstellage eine formschlüssige Sperrung erfährt und sich somit nicht mehr in unerwünschter Weise verlagern kann.

Die Lösung dieser Aufgabe besteht erfindungsgemäß nach dem Kennzeichen des Anspruchs 1 darin, daß die Bremsvorrichtung für den Schlitten ein an diesem und/oder dem daran angreifenden Stellglied des Linearantriebes drehbar gelagertes Ritzel, eine dauernd damit kämmende, an der Führung für den Schlitten ortsfest angeordnete Zahnstange sowie eine am Ritzel mit einem Bremsschieber blockierend eingreifende Federdruckbremse umfaßt, und daß dabei jeder Verschiebestellung des Schlittens am Führungsholm eine ganz bestimmte Drehwinkellage des Ritzels zugeordnet ist.

Aus dieser Maßnahme erwächst der Vorteil, daß ein Nachschwingen des Spritzling-Greifers in seiner in das geöffnete Spritzwerkzeug eingefahrenen Entnahmeposition wirksam unterbunden und der Schlitten am vertikalen Führungsholm bei Energieausfall in seiner jeweiligen Einstellage - also in jeder von ihm gerade eingenommenen Verschiebestellung - gesperrt wird.

Eine besonders gute Arbeitsweise der Spritzling-Entnahmevorrichtung wird erfindungsgemäß dann gewährleistet, wenn nach Anspruch 2 auch dem zur Schließeinheit für das Spritzwerkzeug - horizontal - ausgerichteten Führungsbett für den Schlitten eine Bremsvorrichtung zugeordnet ist, die - vorzugsweise - aus am Schlitten sitzenden, federbelasteten Bremsplatten besteht, denen am Führungsbett eine ortsfeste Bremsschiene zugeordnet ist. Eine solche, baulich vereinfachte Auslegung der Bremsvorrichtung eignet sich besonders zum Einbau zwischen dem horizontalen Führungsbett und dem daran verfahrbaren Schlitten der Spritzling-Entnahmevorrichtung, wenn es auch auf eine nachschwingungsfreie Positionierung des Spritzling-Greifers einerseits zur Schließeinheit und andererseits relativ zu einer Spritzling-Ablage außerhalb der Spritzgießmaschine ankommt.

Eine Spritzling-Entnahmevorrichtung gemäß der Erfindung wird nachfolgend anhand einer Zeichnung ausführlich erläutert.

Es zeigen:

Fig. 1 in schematisch vereinfachter Seitenansicht eine Spritzgießmaschine mit zugeordneter Spritzling-Entnahmevorrichtung und

Fig. 2 ebenfalls in schematisch vereinfachter Darstellung den Linearantrieb für das den Spritzling-Greifer tragende Hängeglied der Spritzling-Entnahmevorrichtung.

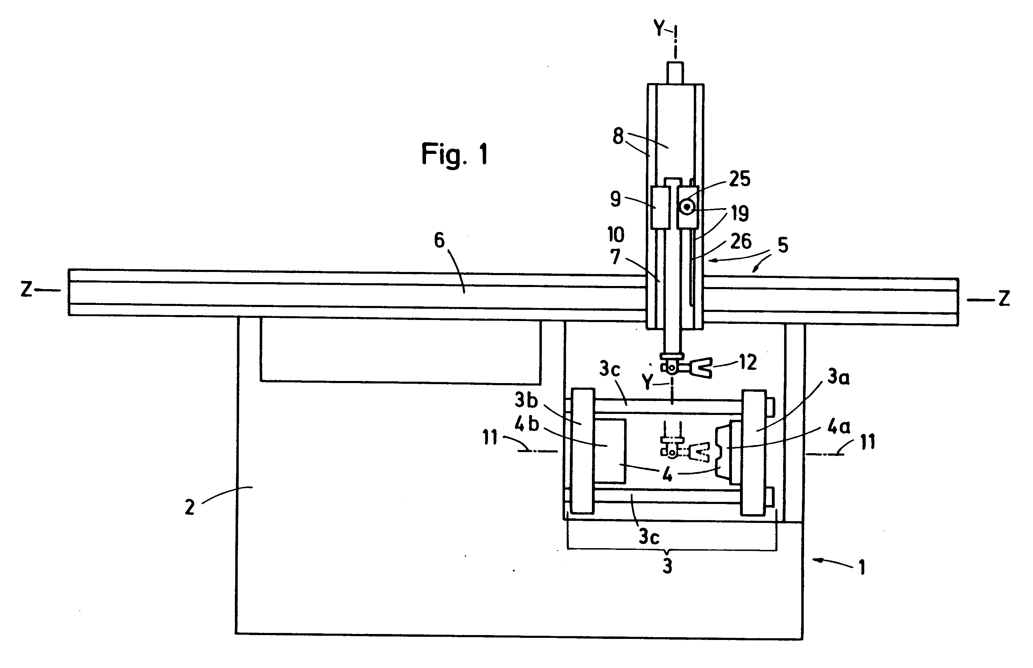

In Fig. 1 ist eine Spritzgießmaschine 1 angedeutet, auf deren Gestell 2 die Schließeinheit 3 für das Spritzwerkzeug 4 angeordnet ist.

Das Spritzwerkzeug 4 besteht dabei aus zwei zusammenarbeitenden Formhälften 4a und 4b, von denen die eine Formhälfte 4a an einer ortsfesten Werkzeugträgerplatte 3a sitzt, während die andere Formhälfte 4b an einer bewegbaren Werkzeugträgerplatte 3b der Schließeinheit 3 sitzt.

Die Schließeinheit 3 weist ferner noch horizontale Führungsstangen 3c auf, welche einerseits die ortsfeste Werkzeugträgerplatte 3a tragen, während sie andererseits zur Führung der bewegbaren Werkzeugträgerplatte 3b dienen.

Damit die im Spritzwerkzeug 4 hergestellten Spritzlinge bei auseinandergefahrenen Formhälften 4a und 4b des Spritzwerkzeuges 4 aus diesem entnommen und außerhalb des Arbeitsbereiches der Spritzgießmaschine 1 abgelegt werden können, ist der Spritzgießmaschine 1 eine Spritzling-Entnahmevorrichtung 5 zugeordnet. Diese besteht aus einem zur Schließeinheit 3 für das Spritzwerkzeug 4 parallel ausgerichteten Führungsbett 6 und einem von diesem getragenen Schlitten 7, der wiederum mit einem vertikalen Führungsholm 8 versehen ist.

Während der Schlitten 7 mit dem Führungsholm 8 entlang dem Führungsbett 6 horizontal verfahrbar ist, trägt der Führungsholm 8 einen vertikal verstellbaren Schlitten 9, der eine Halterung für ein Hängeglied 10 aufweist. Die Schlitten 7 und 9 der Spritzling-Entnahmevorrichtung 5 bilden miteinander gewissermaßen einen Kreuzsupport, welcher zwei rechtwinklig zueinander gerichtete Verstellbewegungen des Hängegliedes 10 ermöglicht, namlich einerseits entlang einer vertikalen Y-Achse und andererseits entlang einer horizontalen Z-Achse, wobei letztere parallel zur Längsachse 11-11 der Schließeinheit 3 bzw. zu deren Betätigungsrichtung ausgerichtet ist.

An seinem unteren Ende trägt das Hängeglied 10 der Spritzling-Entnahmevorrichtung5 einen Spritzling-Greifer 12, der mindestens um zwei rechtwinklig zueinander gerichtete Achsen, nämlich eine Längsachse und eine Querachse verstellbar am Hängeglied 10 gelagert ist.

Zur Verstellbewegung des Schlittens 7 entlang des horizontalen Führungsbettes 6 dient ebenso ein Linearantrieb, wie zur vertikalen Verstellung des Schlittens 9 entlang des Führungsholms 8 am Schlitten 7.

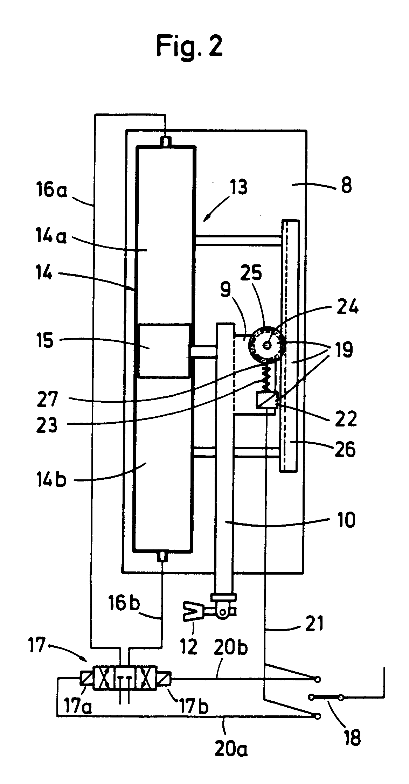

Um eine hohe Verstellgeschwindigkeit für die Schlitten 7 und 9 des Kreuzsupports der Spritzling-Entnahmevorrichtung 5 zu erreichen, werden als Antriebe hierfür pneumatische Linearantriebe benutzt, von denen der Einfachheit halber in Fig. 2 der Zeichnung nur der Linearantrieb 13 für den am Führungsholm 8 vertikal verstellbaren Schlitten 9 gezeigt ist, welcher das Hängeglied 10 für den Spritzling-Greifer 12 trägt.

Das gezeigte Ausführungsbeispiel des Linearantriebs 13 ist als doppelt wirkender Pneumatikantrieb ausgelegt, in dessen Zylinder 14 ein Kolben 15 ohne Kolbenstangen verschiebbar ist (Orega-Zylinder) , der zwei Arbeitsräume 14a und 14b gegeneinander abgrenzt. Der Arbeitsraum 14a wird dabei über eine Druckluftleitung 16a mit Druckluft beliefert, während der Arbeitsraum 14b mit einer Druckluftleitung 16b in Verbindung steht. Zur abwechselnden Beaufschlagung und Belüftung der Arbeitsräume 14a und 14b des Zylinders 14 dient ein elektromagnetisches Schaltventil 17, das bspw. aus einer mittleren Absperrstellung für beide Druckluftleitungen 16a und 16b in eine rechte oder eine linke Öffnungsstellung bewegbar ist.

In der linken Öffnungsstellung des Schaltventils 17 wird dabei über die Druckluftleitung 16a der Arbeitsraum 14a des Zylinders 14 mit Druckluft beaufschlagt, während zugleich der Arbeitsraum 14b entlüftet ist. Umgekehrt wird in der rechten Schaltstellung des Schaltventils 17 über die Druckluftleitung 16b der Arbeitsraum 14b mit Druckluft beaufschlagt, während dann der Arbeitsraum 14a über die Druckluftleitung 16a entlüftet ist.

Die Betätigung des Schaltventils 17 erfolgt über Elektromagnete, die abwechselnd durch einen Schaltkontakt 18 angesteuert werden können, dessen jeweilige Schaltstellung bspw. von der Programmsteuerung der Spritzgießmaschine bestimmt wird. Während der Elektromagnet 17a die linke Schaltstellung des Schaltventils 17 bestimmt, wird durch den Elektromagnet 17b die rechte Schaltstellung desselben angesteuert. Die mittlere bzw. die Grundstellung des Schaltventils 17, welche der Absperrstellung für beide Arbeitsräume 14a und 14b des Pneumatikzylinders 14 entspricht, wird mechanisch, durch Federwirkung, eingestellt.

Zwischen dem auf- und abwärtsbewegbaren Schlitten 9 für das Hängeglied 10 und dessen Führungsholm 8 ist eine an- und abschaltbare Bremsvorrichtung 19 eingebaut, die mit dem Schaltkontakt 18 für die Steuerung des Schaltventils 17 des Linearantriebs 13 in Verbindung steht. Die Steuerverbindung ist dabei solcher Art, daß bei Absperrung der Druckluftzufuhr zu beiden Arbeitsräumen 14a und 14b des Pneumatikzylinders 14 die Bremsvorrichtung 19 angeschaltet bzw. wirksam gemacht wird, während die Freigabe der Druckluftzufuhr zu irgendeinem der beiden Arbeitsräume 14a und 14b des Pneumatikzylinders 14 eine Abschaltung bzw. ein Ausrücken der Bremsvorrichtung 19 zur Folge hat. Mit jeder der beiden Steuerleitungen 20a und 20b für das Schaltventil 17, welche durch den Schaltkontakt 18 bedient werden, steht eine Steuerleitung 21 in Verbindung, die einen Schaltmagneten aus Stellglied 22 beeinflußt. Wird über die Steuerleitung 21 der elektrische Schaltmagnet an Spannung gelegt, dann zieht er gegen die Rückstellwirkung einer Feder 23 an und schaltet dadurch die Bremsvor richtung 19 ab bzw. macht sie unwirksam. Wird hingegen die Steuerleitung 21 von Spannung getrennt, dann fällt der elektrische Schaltmagnet ab. Die Rückstellfeder 23 wird dann augenblicklich wirksam und schaltet damit die Bremsvorrichtung 19 an bzw. rückt sie ein.

Die Bremsvorrichtung 19 wirkt also als Federdruckbremse, die durch den elektrischen Schaltmagneten entgegen der Kraft der Rückstellfeder 22 abgeschaltet wird, aber mechanisch - durch die Rückstellfeder 23 - bei unwirksamem Schaltmagneten in Bremseingriff gelangt.

Die Federdruckbremse weist beim gezeigten Ausführungsbeispiel ein am Schlitten 9 um eine Achse 24 drehbar gelagertes Ritzel 25 auf, das mit einer Zahnstange 26 dauernd kämmt, welche starr bzw. ortsfest am Führungsholm 8 für den Schlitten 9 sitzt.

Bei einer Längsbewegung des Schlittens 9 entlang dem Führungsholm 8 wälzt sich das Ritzel 25 an der Zahnstange 26 formschlüssig ab, so daß jeder Verschiebestellung des Schlittens 9 am Führungsholm 8 eine ganz bestimmte Drehwinkellage des Ritzels 25 zugeordnet ist. Sobald der Schaltmagnet des Stellgliedes 22 durch Trennung der Steuerleitung 21 von Spannung stromlos wird, drückt die Rückstellfeder 23 einen Bremsschieber 27 relativ zum Ritzel 25 in Eingriffslage, so daß er dieses gegen weitere Drehverstellung blockiert und damit über die Zahnstange 26 eine exakte Positionierung des Schlittens 9 am Führungsholm 8 bewirkt.

Vorteilhaft bei dieser Ausgestaltung der Bremsvorrichtung 19 ist auch, daß der Schlitten 9 am Führungsholm 8 bei Energieausfall in seiner jeweiligen Einstellage gesperrt wird, sich also nicht in unerwünschter Weise verlagern kann.

Die Bremsvorrichtung 19 braucht nicht notwendigerweise mit einem formschlüssig in eine Zahnstange 26 eingreifenden Ritzel 25 zu arbeiten. Stattdessen ist es beispielsweise möglich, am Schlitten 9 und/oder an dem daran angreifenden Stellglied 15 des Linearantriebs 13 federbelastete Bremsplatten anzuordnen, denen am Führungsholm 8 dann ortsfes eine Bremsschiene zugeordnet ist. Eine solche, rein kraftschlüssig wirkende Bremsvorrichtung eignet sich wegen ihrer Einfachheit besonders gut zum Einbau zwischen dem Schlitten 7 und dem Führungsbett 6 der Spritzling-Entnahmevorrichtung 5, wenn auch dort das elastische Nachfedern des pneumatischen Linearantriebes unterbunden werden soll.

**Patentansprüche**

1. Vorrichtung zur Spritzling-Entnahme aus dem geöffneten Spritzwerkzeug (4) von Spritzgießmaschinen (1), bei welcher an einem zumindest zur Schließeinheit (3) für das Spritzwerkzeug (4) ausgerichteten Führungsbett (6) ein Schlitten (7) verfahrbar sitzt, der am unteren Ende eines sowohl in Auf- und Abwärtsrichtung als auch in Betätigungsrichtung der Schließeinheit (3) verstellbaren Hängegliedes (10) einen Spritzlinggreifer (12) trägt, welcher wiederum um mindestens zwei jeweils rechtwinklig zueinander gerichtete Gelenke relativ zum Hängeglied (10) verstellbar ist, wobei die Antriebe für die Verstellbewegungen des Hängegliedes (10) in Betätigungsrichtung der Schließeinheit (3) sowie in Auf- und Abwärtsrichtung als pneumatische Linearantriebe (14, 15) ausgelegt sind, und wobei zumindest zwischen dem auf- und abwärts bewegbaren Schlitten (9) für das Hängeglied (10) und dessen Führung (8) eine an- und abschaltbare Bremsvorrichtung (19) eingebaut ist, die mit der Ventil-Steuerung (17; 17a, 17b, 18, 20a, 20b) für dessen Linearantrieb (13) derart in Verbindung steht (21, 22), daß sie jeweils bei Absperrung der Druckluftzufuhr anschaltbar, bei Freigabe der Druckluftzufuhr aber abschaltbar ist,
   **dadurch gekennzeichnet,**
   daß die Bremsvorrichtung für den Schlitten (9) ein an diesem und/oder dem daran angreifenden Stellglied (15) des Linearantriebes (13; 14, 15) drehbar gelagertes Ritzel (25), eine dauernd damit kämmende, an der Führung (8) für den Schlitten (9) ortsfest angeordnete Zahnstange (26) sowie eine am Ritzel (25) mit einem Bremsschieber (27) blockierend eingreifende Federdruckbremse (23, 27) umfaßt, und daß dabei jeder Verschiebestellung des Schlittens (9) am Führungsholm (8) eine ganz bestimmte Drehwinkellage des Ritzels (25) zugeordnet ist.

2. Vorrichtung nach Anspruch 1,
   **dadurch gekennzeichnet,**
   daß auch dem zur Schließeinheit (3) für das Spritzwerkzeug (4) - horizontal - ausgerichteten Führungsbett (6) für den Schlitten (7) eine Bremsvorrichtung zugeordnet ist, die - vorzugsweise - aus am Schlitten (7) sitzenden, federbelasteten Bremsplatten besteht, denen am Führungsbett (6) eine ortsfeste Bremsschiene zugeordnet ist.

**Claims**

1. Device for the withdrawal of injection mouldings from the opened injection mould tool (4) of injection moulding machines (1), in which a slide (7) drivably sits at a guide bed (6) aligned at least with the closure unit (3) for the injection moulding tool (4) and carries an injection mouldings gripper (12) at the lower end of a depending element (10) adjustable not only in upward and downward direction but also in actuating direction of the closure unit (3), which gripper in turn is adjustable relative to the depending element (10) about two joints oriented at right angles to one another, wherein the drives for the adjusting movements of the depending element (10) in the actuating direction of the closure unit (3) as well as in upward and downward direction are executed as pneumatic linear drives (14, 15), and wherein incorporated at least between the upwardly and downwardly movable slide (9) for the depending element (10) and the guide (8) thereof is a brake device (19) which is switchable on and off and which stands in connection with the valve control (17; 17a, 17b, 18, 20a, 20b) for the linear drive (13) thereof in such a manner that it is switchable on each time on blocking of the compressed air feed, characterised thereby, that the brake device for the slide (9) comprises a pinion (25) rotatably mounted at this and/or at the setting element (15), which engages thereat, of the linear drive (13; 14, 15), a rack (26) constantly meshing therewith and stationarily arranged at the guide (8) for the slide (9), as well as a spring pressure brake (23, 27), blockingly engaging with a brake disc (27), at the pinion (25), and that in addition a definite rotary angle position of the pinion (25) is associated with every displacement setting of the slide (9) at the guide beam (8).

2. Device according to claim 1, characterised thereby, that a brake device is also associated with the guide bed (6), which is aligned - horizontally - with the closure unit (3) for the injection moulding tool (4), for the slide (7), which brake device consists - preferably - of spring-loaded brake plates seated at the slide (7), with which plates a stationary brake rail at the guide bed (6) is associated.

**Revendications**

1. Dispositif pour l'extraction de pièces moulées par injection d'un outil ouvert de moulage par injection (4) de machines de moulage par injection (1), dans lequel un chariot (7) est déplaçable le long d'un guide (6) orienté au moins vers l'unité de fermeture (3) de l'outil de moulage par injection (4), chariot qui porte un organe de préhension (12) de la pièce moulée à l'extrémité inférieure d'un bras plongeant (10) déplaçable selon une direction ascendante/descendante et selon la direction d'opération de l'unité de fermeture (3), l'organe de préhension étant quant à lui réglable autour d'au moins deux articulations perpendiculaires entre elles, par rapport au bras plongeant (10), les organes d'entraînement des mouvements du bras plongeant (10) en direction d'opération de l'unité de fermeture (3) ainsi qu'en direction ascendante/ descendante étant sous forme d'organes d'entraînement linéaires pneumatiques (14, 15), un dispositif de freinage (19) apte à être mis en ou hors circuit étant agencé au moins entre le chariot ascendant/descendant (9) du bras plongeant (10) et le moyen de guidage (8) de celui-ci et étant relié à la commande des soupapes (17; 17a, 17b, 18, 20a, 20b) de l'entraînement linéaire (13) dudit chariot (9) de tel le sorte (21 , 22) qu'il est apte à être mis en circuit lors de l'interruption de l'air comprimé et apte à être mis hors circuit lors de la libération de l'alimentation en air comprimé, caractérisé en ce que le dispositif de freinage du chariot (9) comporte un pignon (25), logé de façon à pouvoir tourner, en interaction avec ledit chariot et/ou avec l'organe de positionnement (15) de l'entraînement linéaire (13; 14, 15) agissant sur celui-ci, une crémaillère fixe (26) continuellement en interaction avec ledit pignon, solidaire du moyen de guidage (8) du chariot (9) ainsi qu'un frein à effet de ressort (23, 27) agissant de façon bloquante sur le pignon (25) à l'aide d'une coulisse de freinage (27), et en ce qu'une position angulaire déterminée du pignon (25) est associée à chaque position du chariot (9) par rapport au moyen de guidage (8).

2. Dispositif selon la revendication 1, caractérisé en ce qu'un dispositif de freinage est aussi associé au guide (6) orienté horizontalement par rapport à l'unité de fermeture (3) de l'outil de moulage par injection (4) et au chariot (7), le dispositif de freinage consistant, de préférence, en des plaques de freinage logées dans le chariot (7), sollicitées sous l'effet de ressort, auxquelles est associé un rail de freinage fixe agencé au guide (6).

Fig. 1

EP 0 214 482 B1

# Fig. 2